# EUROPÄISCHE PATENTSCHRIFT

(11) **EP 1 972 070 B1**
(45) Veröffentlichungstag und Bekanntmachung des Hinweises auf die Patenterteilung: **30.09.2009**
(21) Anmeldenummer: 06830460.9
(22) Anmeldetag: 08.12.2006
(51) Int. Cl.: H04B 5/00

(54) **KOMMUNIKATIONSSYSTEM ZUM DATENAUSTAUSCH ZWISCHEN GERÄTEN DER ELEKTROINSTALLATIONSTECHNIK**
COMMUNICATION SYSTEM FOR DATA INTERCHANGE BETWEEN ELECTRICAL INSTALLATION ENGINEERING APPLIANCES
SYSTEME DE COMMUNICATION POUR L'ECHANGE DE DONNEES ENTRE DES APPAREILS DE LA TECHNIQUE D'INSTALLATION ÉLECTRIQUE

(30) Priorität: 12.01.2006 DE 102006001654
(43) Veröffentlichungstag der Anmeldung: 24.09.2008
(73) Patentinhaber: SIEMENS AKTIENGESELLSCHAFT, 80333 München (DE)
(72) Erfinder: DIETZ, Martin, 93105 Tegernheim (DE); ERNST, Michael, 93197 Zeitlarn (DE)
(86) Internationale Anmeldenummer: PCT/EP2006/069456
(87) Internationale Veröffentlichungsnummer: WO 2007/082604

(56) Entgegenhaltungen:
- WO-A-94/24777
- WO-A-20/04036784
- DE-A1-102004 018 207
- DE-A1-102004 018 370

## Beschreibung

Die Erfindung betrifft ein Kommunikationssystem zum Datenaustausch zwischen elektrischen Geräten der Elektroinstallationstechnik.

Ein derartiges Kommunikationssystem dient u.a. dazu, Schalt- oder Funktionszustände von Geräten oder Gerätegruppen abzufragen, anzuzeigen und ggf. auf diese Einfluss zu nehmen. Beispielsweise können die Schalt- oder Funktionszustände der Geräte an einer zentralen Leitstelle autorisiertem Fachpersonal zugänglich gemacht werden; hierbei besteht die Möglichkeit, gezielt Maßnahmen einzuleiten, um Fehlerzustände zu beheben oder auch um Stromkreise ein- bzw. abzuschalten. Auch Funktionsverknüpfungen zwischen Geräten, die in einem Verteiler oder dergleichen angeordnet sind, gilt es herzustellen. Im einfachsten Fall sind dabei Hilfsschalter miteinander zu verbinden.

Aus der WO 2004/036784 A1 ist ein unsymmetrisches Nachrichtenübertragungssystem unter Verwendung eines elektrischen Nahfelds bekannt, welches mit einem Sender versehen ist, der zumindest ein Koppelelement aufweist, über das im Wesentlichen ein elektrisches Nahfeld ausgestreut wird. Das Nachrichtenübertragungssystem umfasst dabei einen ohnehin vorhandenen Infrastrukturkörper, der ein von Erde elektrisch isoliertes und elektrisch leitendes Leiterelement aufweist, in das das elektrische Feld eingekoppelt wird. Mittels eines Empfängers, der zumindest ein Koppelelement aufweist, wird das in dem Leiterelement übertragene Feld ausgekoppelt.

Aus der DE 10 2004 018 207 A1 ist eine Vorrichtung zur kontaktlosen Übertragung von Energie und/oder Daten in einem Fahrzeug zwischen einer karosserieseitigen Einrichtung und einer weiteren Einrichtung bekannt. Die Übertragung erfolgt über eine hochfrequente Übertragungsstrecke. Als Übertragungsstrecke dient beispielsweise eine Koaxialleitung, die aus einem Innenleiter, einem den Innenleiter umgebenden Dielektrikum und einer den Außenleiter des Koaxialleiters bildenden Sitzschiene aufgebaut ist.

Es ist die Aufgabe der vorliegenden Erfindung, ein Kommunikationssystem zum Datenaustausch zwischen elektrischen Geräten der Elektroinstallationstechnik zu schaffen, das sich durch eine einfache Topologie und einen geringen Installationsaufwand auszeichnet.

Diese Aufgabe wird erfindungsgemäß durch die Merkmale des Patentanspruchs 1 gelöst; vorteilhafte Ausgestaltungen sind jeweils Gegenstand von weiteren Ansprüchen.

Durch die Datenübertragung zwischen elektrischen Geräten mittels elektrischer Felder mit einem hochfrequenten Wechselstrom, welche auf in der Installationsanordnung bestehende elektrisch leitende, ggf. voneinander galvanisch getrennte, Elemente durch Sendemittel der Geräte eingeprägt bzw. durch Empfangsmittel der Geräte von den Elementen abgegriffen werden, kann auf ein aufwändiges drahtgebundenes Kommunikationsnetzwerk einerseits und auf ein komplexes und daher störanfälliges Funknetzwerk andererseits verzichtet werden. Demzufolge werden entgegen den herkömmlichen Kommunikationssystemen, wie beispielsweise bei dem European Installation Bus, dem Local Operating Network oder Powerline, keine Steuerleitungen bzw. keine Netzleitungen zur Signalübertragung benötigt; vielmehr kann von einem Kommunikationssystem mit einem einfachen Aufbau und einem geringen Installationsaufwand profitiert werden, welches sich zudem hervorragend für Nachrüstungen eignet.

Bei einer derartigen Nahfeldkommunikation weist das Datenübertragungssystem einen Sender auf, mit dessen Koppelelement im Wesentlichen ein elektrisches Nahfeld ausgesendet wird. Dieses Feld wird in ein elektrisch leitendes Element kapazitiv eingekoppelt, in dem dann ein Strom, insbesondere ein impulsförmiger Verschiebestrom auf Grund einer Ladungsveränderung, an dem elektrisch leitenden Element auftritt. Das elektrisch leitende Element ist elektrisch mit dem Erdpotential und ggf. mit weiteren elektrisch leitenden Elementen kapazitiv gekoppelt. Durch geeignete kapazitive Ein- und Auskopplung eines Signals wird mittels eines solchen Elements und ggf. mittels weiterer Elemente über zwischen denselben und dem Erdpotenzial vorhandene Koppelkapazitäten und Koppelwiderstände unter Einbeziehung der kommunikationsfähigen Geräte ein Stromkreis gebildet.

An einem beliebigen Punkt eines der elektrisch leitenden Elemente kann nun mit geeigneten Empfangsmitteln eine Potenzialdifferenz zwischen dem elektrisch leitenden Element und Erde gemessen und damit ein Signal empfangen werden. Das Signal, welches z.B. als Steuer-, Melde- oder auch Befehlsignal ausführbar ist, umfasst im Allgemeinen ein Datentelegramm und dient beispielsweise dazu einen Aktor, eine elektronische Signalverstärker-Schaltung oder auch ein elektromechanisches Signalverstärker-Gerät, beispielsweise ein Relais, zu beaufschlagen. Hierbei können ein Melde-, Steuer- oder auch Laststromkreis für anzuschließende Anzeigeelemente, Kontrollgeräte bzw. Verbraucher zu- oder abgeschaltet werden. Typischerweise kommen bei der Anwendung des Kommunikationssystems in einem Verteiler oder Schaltschrank kommunikationsfähige E-lektrogeräte, wie z.B. Schutzschaltgeräte, Leitungsschutzschalter, Fehlerstromschutzschalter, Leistungsschalter, Motorschutzgeräte, Schütze, Relais, Schalt- und Kontrollgeräte, Hilfsschalter, Fernschalter, Zeitschaltuhren, Anzeigegeräte sowie Elektronikeinheiten, zum Einsatz.

Wesentlich ist dabei, dass Signalfrequenz, elektrisch leitende Elemente und Sender/Empfänger so aufeinander abgestimmt sind, dass tatsächlich eine Nahfeldkommunikation stattfindet, wobei keine Funkverbindung mit vorwiegender Abstrahlung des Signals über den Innenraum eines Gehäuses oder eines Anlagenteils vorliegt, sondern tatsächlich eine vorwiegend kapazitive Kopplung an elektrisch leitenden Elementen erfolgt, die jedoch in der Weise gegeben sein muss, dass an einer vorgesehenen Empfangsstelle ein Signal mit ausreichendem Signalpegel empfangen werden kann.

Mit dem erfindungsgemäßen System werden mitunter die Verluste eines strahlenden Systems vermieden, und somit ein sehr geringer Stromverbrauch in Sender und Empfänger erreicht. Es werden beim Senden keine sich weit ausbreitenden, unerwünschten Streufelder produziert, da die kapazitive Einkopplung vom Sender in das elektrisch leitende Element durch ein elektrisches Nahfeld mit einer nur geringen Reichweite vonstatten geht. Die Hauptverluste entstehen dabei in den Kopplungskapazitäten und Kopplungswiderständen zwischen den unterschiedlichen leitenden Elementen sowie durch die Eigeninduktivitäten dieser Elemente.

Eine Signalübertragung im quasistationären elektrischen Feld benötigt keine Taktgewinnung auf der Empfängerseite, denn der Systemtakt wird einheitlich in das Übertragungsmedium, insbesondere in die elektrisch leitenden Elemente, eingespeist. Grundsätzlich können aber die üblichen Verfahren der Funktechnik, wie Trägeraufbereitung, Modulation, Multiplexverfahren, Empfang und Demodulation uneingeschränkt angewendet werden.

In einer Ausführungsform des Kommunikationssystems weist dieses ein die Geräte beinhaltendes Metallgehäuse auf, das als elektrisch leitendes Koppelelement zur Datenübertragung dient. Im Gegensatz zu einem klassischen Funksystem, bei dem ein derartiges Metallgehäuse für die Ausbreitung eines Funksignals auf Grund Signal löschender Reflexionen und einer Signal abschirmenden Wirkung eher hinderlich ist, kann überraschenderweise besagte nachteilige Abschirmungs-Wirkung in eine vorteilhafte Kopplungs-Wirkung zu Gunsten eines funktionsfähigen Kommunikationssystems gewandelt werden. Gleichermaßen tragen Metallverstrebungen und/oder Metallhutschienen als Teil des Gehäuses zur Weiterleitung der Kommunikations-Signale bei.

Vorteilhafterweise erfolgt die Datenübertragung zwischen den kommunikationsfähigen Geräten direktional oder bidirektional; je nach Bestückung der Geräte mit Funktionsmodulen werden dazu wahlweise Sender, Empfänger oder eine Kombination aus Sender und Empfänger vorgesehen, wodurch verschiedenste Funktionen ausführbar sind.

Die vorteilhafte Nutzung des Frequenzbandes zwischen 5 MHz und 50 MHz für den hochfrequenten Wechselstrom führt dazu, dass in den Geräten eingesetzte elektronische Sender- und/oder Empfänger-Schaltungen in stromsparender CMOS-Technologie ausgeführt werden können, und die Koppelelemente, deren Abmessungen gering gegenüber der Wellenlänge des Wechselstromes sein sollten, maximal die Größe herkömmlicher Reiheneinbaugeräte aufweisen. Besonders günstig ist der Einsatz einer Frequenz von 13,56 MHZ und/oder 40,68 MHz für den hochfrequenten Wechselstrom. Diese Frequenzen liegen in einem so genannten ISM-Band, also einem für Industrie, Wissenschaft und medizinische Anwendungen freigegebenen Frequenzbereich mit einer generellen Bewilligung, der nicht der staatlichen Regulierung unterliegt und lizenzfrei genutzt werden darf. Es müssen lediglich Auflagen bezüglich der Sendeleistung und der Störung benachbarter Frequenzbereiche eingehalten werden. Geräte, die in diesem Frequenzband arbeiten, können vom Benutzer sofort in Betrieb genommen werden, ohne dass vor der Erstinbetriebnahme um eine eigene Bewilligung nachgesucht werden muss.

Mit Vorteil kann das Kommunikationssystem als Teil einer Kommunikationsanordnung verwendet werden, bei dem eine außerhalb des Gehäuses angeordnete Kommunikationseinheit mit Mitteln zur kapazitiven Datenübertragung vorgesehen ist, welche im Sinne einer Nahfeldkommunikation mittels elektrisch leitender Infrastrukturelemente an die Mittel zur Datenübertragung der Geräte kapazitiv gekoppelt ist. Als Infrastrukturkörper können alle Körper verwendet werden, die elektrisch leitende Elemente aufweisen, wozu beispielsweise Heizungsrohre, anderweitig genutzte Stromleitungen oder elektrisch leitende Folien zählen, so dass auf eigens für das Kommunikationsnetzwerk zu installierende Leitungen verzichtet werden kann. In Fällen, in denen die vorhandene Infrastruktur zur Signalweiterleitung nicht ausreicht, können auf einfachste Weise mit einem geringen Aufwand u.a. per Walze, Spray oder mit dem Pinsel elektrisch leitende Schichten an Wänden, Anlagen, Bauteilen und dergleichen aufgebracht werden, welche die Leitfähigkeit des Systems verbessern.

Die Erfindung sowie vorteilhafte Ausgestaltungen gemäß den Merkmalen der weiteren Ansprüche werden im Folgenden anhand in der Zeichnung dargestellter Ausführungsbeispiele näher erläutert, ohne dass insoweit eine Beschränkung der Erfindung erfolgt; darin zeigen:
- FIG 1: ein schematisch dargestelltes Kommunikationssystem gemäß Anspruch 1;
- FIG 2, 3: zwei Varianten einer Kommunikationsanordnung mit einem erfindungsgemäßen Kommunikationssystem; und
- FIG 4: ein elektrisches Ersatzschaltbild des erfindungsgemäßen Kommunikationssystems.

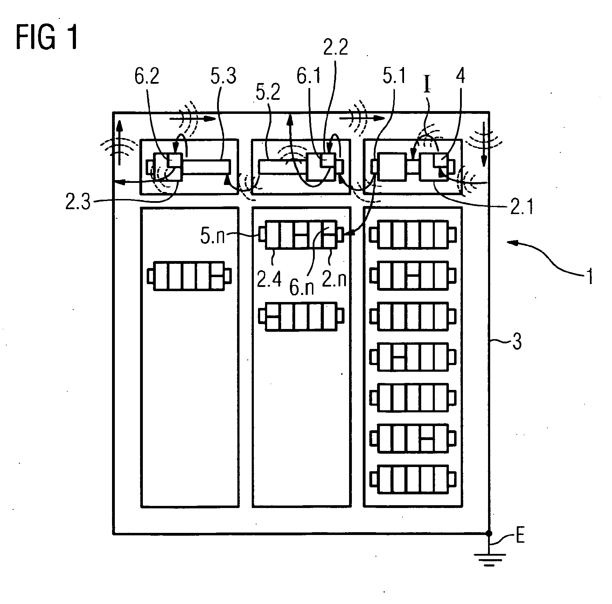

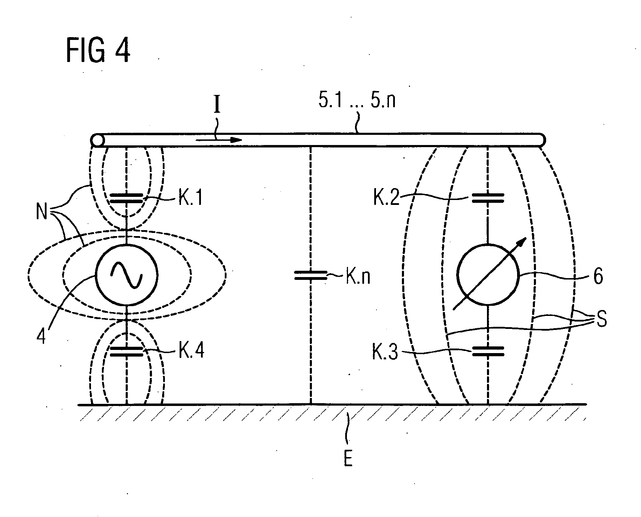

In FIG 1 ist ein Kommunikationssystem 1 zum Datenaustausch zwischen elektrischen Geräten 2.1 bis 2.n, insbesondere Reiheneinbaugeräte, der Elektroinstallationstechnik gezeigt, die innerhalb eines Gehäuses 3 angeordnet sind. Als Kommunikationsmittel dient ein Signalgenerator 4, welcher in den Geräten eingepasst ist. Als Signalgenerator 4 kann beispielsweise ein Frequenz- oder Impulsgenerator zur Ladungsänderung eingesetzt werden. Im Unterschied zu herkömmlichen Geräten weist das dargestellte Gerät 2.1 demnach einen Sender und ein Koppelelement als Teil des Kommunikationsmittels auf, mit denen im Wesentlichen ein quasistationäres Nahfeld N gemäß FIG 4 erzeugt bzw. ausgesendet werden kann. Unter einem quasistationären Nahfeld N wird ein Feld verstanden, das in Wechselwirkung zwischen einer Signalquelle und einem dazu beabstandeten Koppelelement erzeugt wird und eine vorwiegend elektrische Nahfeldkomponente aufweist.

Dieses Feld wird auf die Hutschiene 5.1 des Gehäuses 3 asymmetrisch eingekoppelt. Neben der einen Hutschiene 5.1 sind in dem Gehäuse 3 weitere elektrisch leitende Elemente, insbesondere Hutschienen 5.2 bis 5.n, vorhanden, die untereinander und mit dem Erdpotential E vorwiegend kapazitiv gekoppelt sind. Durch die asymmetrische Einkopplung eines hochfrequenten Wechselstroms I in die Hutschiene 5.1 wird nun über die weiteren leitenden Elemente 5.2 bis 5.n und die zwischen denselben und dem Erdpotential E vorhandenen Koppelkapazitäten und Koppelwiderstände K - wie in FIG 4 veranschaulicht - ein Stromkreis gebildet. In diesem Zusammenhang bedeutet asymmetrische Einkopplung, dass die Koppelkapazität zwischen jeweils einer Koppelfläche und dem elektrisch leitenden Element oder Medium bzw. zwischen jeweils einer Koppelfläche und dem Erdpotential E unterschiedlich sind und daher eine Potentialdifferenz entstehen kann.

Durch die asymmetrische Einkopplung des hochfrequenten Wechselstroms I resultiert ein quasistationäres Streufeld S gemäß FIG 4, welches von den elektrisch leitenden Elementen 5.1 bis 5.n ausgesendet wird. Unter einem quasistationären Streufeld S wird ein Feld verstanden, das in Wechselwirkung zwischen den undefiniert angeordneten elektrisch leitenden Elementen 5.1 bis 5.n und einem dazu beabstandeten Signaldetektor 6 erzeugt wird und eine vorwiegend elektrische Nahfeldkomponente aufweist. An einem beliebigen Punkt eines der Elemente 5.1 bis 5.n kann in der Folge mit geeigneten Empfangselementen 6.1 bis 6.n, insbesondere mittels eines hochohmigen Signaldetektors 6 oder auch mittels eines in dem jeweiligen Gerät integrierten Radioempfängers, eine Potentialdifferenz gemessen und damit das Signal empfangen werden. Ein Aktor, der Teil des Empfängers oder an diesen als Modul angeschlossen ist, übernimmt in der Folge den Schaltvorgang, um z.B. einen Laststromkreis für einen Verbraucher zu schließen. Die Systemkomponenten Signalgenerator, Signaldetektor sowie die Aktoren können stromnetz- oder batteriegespeist betrieben werden.

Wesentlich ist dabei die Frequenz des hochfrequenten Wechselstroms I, die so gewählt werden muss, dass die Übertragungseigenschaften der Elemente 5.1 bis 5.n ein Optimum erreichen. Geräte mit bidirektionaler Kommunikationsfähigkeit sind mit Sende- und Empfangsmitteln ausgerüstet. Ein vorteilhafter Anwendungsfall kann beispielsweise darin bestehen, Parameter oder Funktionszustände von z.B. Leistungsschaltern, welche in Schaltanlagen vorhanden sind, abzufragen und an ein Visualisierungssystem zu senden.

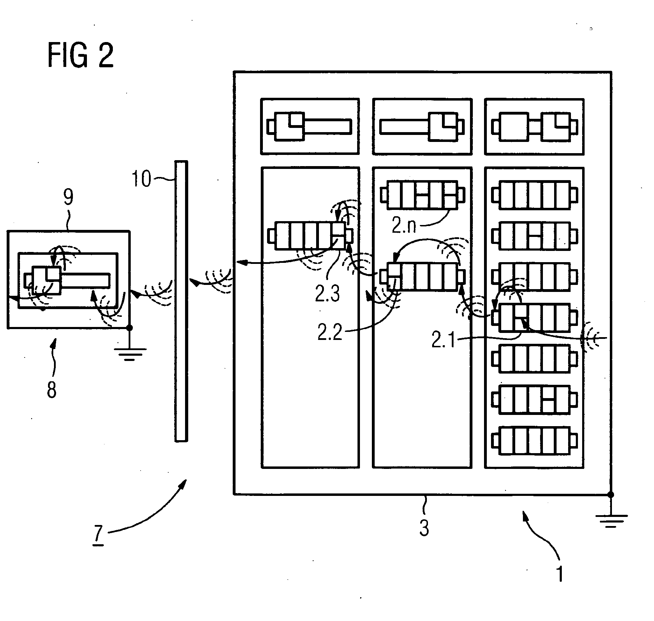

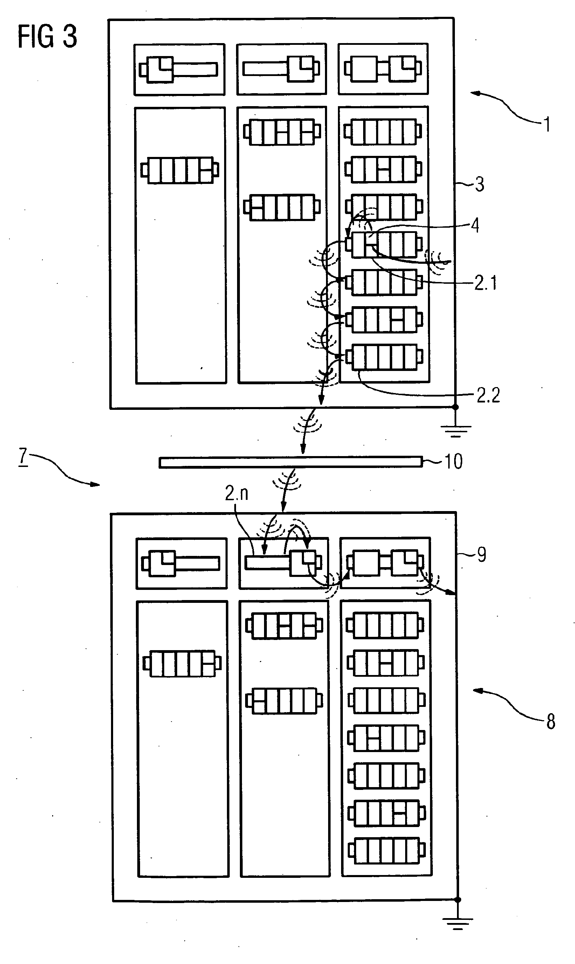

In den FIG 2 und 3 ist jeweils eine Kommunikationsanordnung 7 dargestellt, welche mit einem Kommunikationssystem 1 nach FIG 1 versehen ist. Hierbei ist der Datenaustausch zwischen den Geräten 2.1 bis 2.n nicht auf den Raum innerhalb des Gehäuses 3 beschränkt, sondern erstreckt sich unter dem Einsatz des elektrisch leitenden Gehäuses 3 oder entsprechender Komponenten desselben bis zu einer Kommunikationseinheit 8 mit einem eigenen Gehäuse 9, das mit dem Erdpotential E verbunden ist. Vorteilhafterweise kann dabei auf außerhalb der Gehäuse 3;9 angeordnete Empfangseinheiten verzichtet werden, die bei konventionellen Kommunikationssystemen zur Datenübertragung ggf. notwendig wären.

Die Datenübertragung erfolgt bei einer kleinen Distanz, also im Nahfeldbereich, zwischen den beiden Gehäusen 3 und 9 unmittelbar bzw. bei einer großen Distanz mittelbar über vorhandene Infrastrukturelemente 10, die an sich elektrisch leitend sein können oder mit elektrisch leitenden Elementen versehen und im Nahfeldbereich untereinander kapazitiv gekoppelt sind.

In den beiden Ausführungsbeispielen stellt die jeweilige Einheit 8 gemäß FIG 2 eine DCF-77-Empfangseinheit und gemäß FIG 3 eine weitere Stromverteilung dar. Mit der DCF-77-Technik werden Funkuhren über ein Funksignal mit der mitteleuropäischen Uhrzeit versorgt wird. Die DCF-77-Empfangseinheit muss außerhalb des metallischen oder mit metallischen Elementen versehenen Gehäuses 3 angebracht sein, damit das Funksignal nicht von diesem abgeschirmt wird. Damit dennoch eine in dem Gehäuse 3 angeordnete Zeitschaltuhr mit den Uhrzeitdaten versorgt wird, kommt die beschriebene elektrische Nahfeldkommunikation unter Verwendung der Funk abschirmenden, jedoch nunmehr zur Datenübertragung nutzbaren, Elemente zum Einsatz. Somit ist eine kapazitive Übertragung von Signalen über weite Strecken bis hin zu einer, für herkömmliche Funksysteme ungünstigen, Unterverteilung und letztlich darin befindlichen Funktionseinheiten möglich.

Die Übertragungseigenschaften der bestehenden Elemente können durch die Montage von zusätzlichen leitenden Elementen, wie beispielsweise eine elektrisch leitende Folie, verbessert werden. Diese Folie wird bei elektrischen Installationsanlagen vorteilhaft in Form eines umlaufenden Bandes auf Höhe der üblicherweise installierten Stromverteiler angebracht, damit gute Kopplungseigenschaften gewährleistet sind. Anstelle der Folie ist auch ein metallisches Gitter vorstellbar, das in den Putz vor dem Aufbringen eingearbeitet wird. Eine besonders einfache Aufbringung des elektrisch leitenden Infrastrukturelementes 10 ist dann gegeben, wenn elektrisch leitende Beschichtungen verwendet werden, die beispielsweise per Walze, Spray oder Pinsel auf die Wand aufbracht werden können. Damit ist die Möglichkeit gegeben auch elektrisch problematische Verhältnisse auf einfache Weise erheblich zu verbessern.

In FIG 4 ist beispielhaft ein Ersatzschaltbild der Kommunikationssysteme bzw. -anordnungen mit Mitteln zur Nahfeldkommunikation gemäß den FIG 1 bis 3 dargestellt. Die dabei zum Tragen kommende elektrische Nahfeldkommunikation basiert auf einem einen Verschiebestrom I aufweisenden Stromkreis, der durch kapazitive Ankopplung K.1 bis K.n des Signalgenerators 4 und des Signalempfängers 6 - ggf. unter Einbeziehung eines Verbrauchers - an elektrisch leitende Medien oder Elemente 5.1 bis 5.n und dem Erdpotential E geschlossen ist. Im Bereich des Senders 4 wird dabei ein Nahfeld N und im Bereich des Empfängers 6 ein Streufeld S ausgebildet. Die Koppelwiderstände K.n sind innerhalb des Systems nicht vermeidbar, jedoch bekannt und können somit bei der Systemauslegung berücksichtigt werden. Je kleiner die Koppelwiderstände K.n sind, desto zuverlässiger ist die Nachrichtenübertragung.

In den vorliegenden Ausführungsbeispielen sind Frequenzen von 13,56 MHz bzw. 40,68 MHz für den hochfrequenten Wechselstrom I gewählt. Diese Frequenzen liegen in einem für Industrie, Wissenschaft und medizinische Anwendungen freigegebenen Frequenzband, einem so genannten ISM-Band.

Die zuvor erläuterte Erfindung kann wie folgt zusammengefasst werden:

Um ein Kommunikationssystem 1 zum Datenaustausch zwischen elektrischen Geräten 2.1 bis 2.n der Elektroinstallationstechnik zu schaffen, das sich durch eine einfache Topologie und einen geringen Installationsaufwand auszeichnet, ist vorgesehen, mittels quasistationärer elektrischer Felder N bzw. S mit einem hochfrequenten Wechselstrom an in der Installationsanordnung bestehende elektrisch leitende Elemente 5.1 bis 5.n im Sinne einer kapazitiven Nahfeldkommunikation signaltechnisch anzukoppeln.

Der durch das Kommunikationssystem 1 gegebene Kommunikationskanal ermöglicht die Nutzung vorhandener metallischer Strukturen 5.1 bis 5.n, beispielsweise eines Installationsgehäuses 3, zur Datenübertragung. Derartige metallische Strukturen 5.1 bis 5.n, die technische Schwierigkeiten bei der konventionellen Funktechnik hinsichtlich der Ausführbarkeit bedingen, sind bei dem erfindungsgemäßen Kommunikationssystem 1 überraschenderweise von Nutzen. Durch eine geeignete Frequenzwahl kann die Störsicherheit eines leitungsgebundenen Systems ohne separate Leitungsinstallation weitestgehend erreicht werden. Die Vermeidung von üblicherweise zu installierenden Leitungen zur Verbindung verschiedener Geräte verringert in einem erheblichen Maße den Installationsaufwand.

## Patentansprüche

1. Kommunikationssystem (1) zum Datenaustausch zwischen elektrischen Geräten (2.1...2.n) der Elektroinstallationstechnik, das neben den Geräten (2.1...2.n) der Elektroinstallationstechnik auch ein Gehäuse (3) mit zumindest einem elektrisch leitenden Element (5.1...5.n) aufweist, wobei in dem Gehäuse (3) die Geräte (2.1...2.n) angeordnet sind, welche jeweils Mittel (4;6) zur Datenübertragung aufweisen, wovon zumindest ein Mittel (4) zum Versenden von Daten eines ersten Gerätes (2.1...2.n) derart mit unterschiedlichen Koppelkapazitäten (K.1, K.4) kapazitiv an das Erdpotential und kapazitiv an das zumindest eine elektrisch leitende Element (5.1...5.n) des Gehäuses (3) angekoppelt ist, dass dem elektrisch leitenden Element (5.1...5.n) ein quasistationäres Nahfeld (N) mit einem hochfrequenten Wechselstrom aufgeprägt wird, wobei ein daraus resultierendes quasistationäres Streufeld (S) mit einem hochfrequenten Wechselstrom an dem zumindest einen elektrisch leitenden Element (5.1...5.n) des Gehäuses (3) bereitsteht, und wobei zumindest ein Mittel (6.1...6.n) zum Empfangen von Daten eines weiteren Gerätes (2.1...2.n) derart mit unterschiedlichen Koppelkapazitäten (K.2, K.3) kapazitiv an das Erdpotential und an das zumindest eine elektrisch leitende Element (5.1...5.n) angekoppelt ist, dass von diesem das Streufeld (S) abgegriffen wird.

2. Kommunikationssystem (1) nach Anspruch 1, bei dem die Geräte (2.1...2.n) als Schaltgerät, Schutzschaltgerät, insbesondere Leitungsschutzschalter oder Fehlerstromschutzschalter, ausgeführt sind.

3. Kommunikationssystem (1) nach Anspruch 1, bei dem das zumindest eine elektrisch leitenden Element (5.1...5.n) als Metallgehäuse, insbesondere Stromverteiler oder Schaltschrank, Metallgehäuseverstrebung und/oder Metallhutschiene ausgeführt ist.

4. Kommunikationssystem (1) nach Anspruch 1, bei dem die Mittel zur Datenübertragung als Sender (4) und/oder Empfänger (6) ausgeführt sind.

5. Kommunikationssystem (1) nach Anspruch 1 oder 4, bei dem die Datenübertragung direktional bzw. bidirektional stattfindet.

6. Kommunikationssystem (1) nach einem der vorhergehenden Ansprüche, bei dem die Frequenz des hochfrequenten Wechselstroms im Bereich von 5 bis 50 MHz, insbesondere 13,56 und/oder 40,68 MHz, liegt.

7. Kommunikationsanordnung (7) mit einem Kommunikationssystem (1) nach Anspruch 1, das eine außerhalb des Gehäuses (3) angeordnete Kommunikationseinheit (8) mit Mitteln (4;6) zur, insbesondere direktionalen bzw. bidirektionalen, Datenübertragung aufweist, welche im Sinne einer Nahfeldkommunikation mittels elektrisch leitender Infrastrukturelemente (10) an die Mittel- (4;6) zur Datenübertragung der Geräte (2.1...2.n) gekoppet ist.

8. Kommunikationsanordnung (7) nach Anspruch 7, bei dem die Kommunikationseinheit (8) als weiteres Gerät oder weitere Geräteanordnung in einem separaten Gehäuse (9), insbesondere Verteiler oder Schaltschrank, ausgeführt ist.

9. Kommunikationsanordnung (7) nach Anspruch 8, bei dem das weitere Gerät (8) als Empfänger eines Funkuhrensignals, insbesondere als DCF-77-Empfänger, ausgeführt ist.

10. Kommunikationsanordnung (7) nach Anspruch 7, bei dem die elektrisch leitenden Infrastrukturelemente (10) als Wasserrohre, Heizungsrohre, Metallverstrebungen, Metallfolien oder Stromleitungen ausgeführt sind.

11. Kommunikationsanordnung (7) nach Anspruch 7 oder 10, bei dem die elektrisch leitenden Infrastrukturelemente (10) als mittels Walze, Spray, Pinsel oder dergleichen aufgebrachte elektrisch leitende Schichten ausgeführt sind.

12. Kommunikationsanordnung (7) nach Anspruch 7, 10 oder 11, bei dem die elektrisch leitenden Infrastrukturelemente (10) im oder unter Putz verlegt sind.

13. Verwendung des Kommunikationssystems (1) nach Anspruch 1 oder der Kommunikationsanordnung (7) nach Anspruch 7 in einem Gebäude.

## Claims

1. Communication system (1) for exchanging data between electrical appliances (2.1...2.n) in electrical installation technology, which, aside from the appliances (2.1...2.n) in electrical installation technology, also has a housing (3) with at least one electrically conductive element (5.1...5.n), with the appliances (2.1...2.n) being arranged in said housing (3), each appliance having means (4;6) for data transmission respectively, of which at least one means (4) for transmitting data from a first appliance (2.1...2.n) is capacitively coupled with different coupling capacitors (K.1, K.4) to the earth potential and is capacitively coupled to the at least one electrically conductive element (5.1...5.n) of the housing (3), such that a quasi-stationary near-field (N) with a high-frequency AC current is impressed on the electrically conductive element (5.1...5.n), with a quasi-stationary scatter field (S) having a high-frequency AC current resulting therefrom being available at the at least one electrically conductive element (5.1...5.n) of the housing (3) and with at least one means (6.1....6.n) for receiving data of an additional appliance (2.1...2.n) being capacitively coupled with different coupling capacitors (K.2...K.3) to the earth potential and to the at least one electrically conductive element (5.1...5.n) such that the scatter field (S) is tapped therefrom.

2. Communication system (1) according to claim 1, in which the appliances (2.1...2.n) are embodied as a switch device, safety switch device, in particular a circuit breaker or a residual current circuit breaker.

3. Communication system (1) according to claim 1, in which the at least one electrically conductive element (5.1..5.n) is embodied as a metal housing, in particular a current distributor or control cabinet, metal housing strut and/or metal top hat rail.

4. Communication system (1) according to claim 1, in which the means for data transmission are embodied as a transmitter (4) and/or receiver (6).

5. Communication system (1) according to claim 1 or 4, in which the data transmission takes place directionally and/or bidirectionally.

6. Communication system (1) according to one of the preceding claims, in which the frequency of the high-frequency AC current lies in the range of 5 to 50 MHz, in particular 13.56 and/or 40.68 MHz.

7. Communication arrangement (7) having a communication system (1) according to claim 1, which has a communication unit (8) having means (4; 6) arranged outside the housing (3) and for in particular directional and/or bidirectional data transmission, which in terms of a near-field communication by means of electrically conductive infrastructure elements (10) is coupled to the means (4;6) for data transmission of the appliances (2.1...2.n).

8. Communication arrangement (7) according to claim 7, in which the communication unit (8) is embodied as an additional device or an additional appliance arrangement in a separate housing (9), in particular distributor or control cabinet.

9. Communication arrangement (7) according to claim 8, in which the additional device (8) is embodied as a receiver of a radio clock signal, in particular as a DCF-77 receiver.

10. Communication arrangement (7) according to claim 7, in which the electrically conductive infrastructure elements (10) are embodied as water pipes, heating pipes, metal struts, metal foils or power lines.

11. Communication arrangement (7) according to claim 7 or 10, in which the electrically conductive infrastructure elements (10) are embodied as electrically conductive layers applied using rollers, spray, brushes or suchlike.

12. Communication arrangement (7) according to claim 7, 10 or 11, in which the electrically conductive infrastructure elements (10) are installed in or under plaster.

13. Use of the communication system (1) according to claim 1 or the communication arrangement (7) according to claim 7 in a building.

## Revendications

1. Système de communication (1) destiné à l'échange de données entre des appareils électriques (2.1 ... 2.n) de la technique d'installation électrique, qui, outre les appareils (2.1 ... 2.n) de la technique d'installation électrique, présente également un boîtier (3) comprenant au moins un élément électriquement conducteur (5.1 ... 5.n), les appareils (2.1 ... 2.n) étant disposés dans le boîtier (3), lesquels présentent respectivement des moyens (4 ; 6) destinés à la transmission de données, dont au moins un moyen (4) destiné à émettre des données d'un premier appareil (2.1 ... 2.n), est couplé capacitivement, avec des capacités de couplage différentes (K.1, K.4), de telle manière capacitive au potentiel de la terre et de telle manière à l'au moins un élément électriquement conducteur (5.1 ... 5.n) du boîtier (3) qu'un champ proche (N) quasi stationnaire, comprenant un courant alternatif à haute fréquence, est empreint à l'élément électriquement conducteur (5.1 ... 5.n), un champ de dispersion (S) quasi stationnaire résultant, comprenant un courant alternatif à haute fréquence, étant disponible sur l'au moins un élément électriquement conducteur (5.1 ... 5.n) du boîtier (3), et au moins un moyen (6.1 ... 6.n) destiné à la réception de données d'un appareil supplémentaire (2.1 ... 2.n), comprenant différentes capacités de couplage (K.2, K.3), étant couplé capacitivement de telle manière au potentiel de la terre et de telle manière à l'au moins un élément électriquement conducteur (5.1 ... 5.n) que le champ de dispersion (S) est prélevé par celui-ci.

2. Système de communication (1) selon la revendication 1, dans lequel les appareils (2.1 ... 2.n) sont réalisés en tant qu'appareil de commutation, disjoncteur de protection, notamment disjoncteur de protection de circuit ou disjoncteur de protection contre les courants de court-circuit.

3. Système de communication (1) selon la revendication 1, dans lequel l'au moins un élément électriquement conducteur (5.1 ... 5.n) est réalisé en tant que boîtier métallique, notamment distributeur de courant ou armoire de commande, en tant qu'entretoise de boîtier métallique et/ou profilé chapeau métallique.

4. Système de communication (1) selon la revendication 1, dans lequel les moyens destinés à la transmission de données sont réalisés en tant qu'émetteur (4) et/ou récepteur (6).

5. Système de communication (1) selon la revendication 1 ou 4, dans lequel la transmission de données a lieu de manière directionnelle resp. bidirectionnelle.

6. Système de communication (1) selon l'une quelconque des revendications précédentes, dans lequel la fréquence du courant alternatif à haute fréquence est située dans la plage de 5 à 50 MHz, notamment est de 13,56 et/ou 40,68 MHz.

7. Dispositif de communication (7) comprenant un système de communication (1) selon la revendication 1, qui présente une unité de communication (8) disposée à l'extérieur du boîtier (3), comprenant des moyens (4 ; 6) destinés à la transmission de données, notamment directionnelle resp. bidirectionnelle, laquelle est couplée, au sens d'une communication à champ proche, au moyen d'éléments d'infrastructure (10) électriquement conducteurs, aux moyens (4 ; 6) destinés à la transmission de données des appareils (2.1 ... 2.n).

8. Dispositif de communication (7) selon la revendication 7, dans lequel l'unité de communication (8) est réalisée en tant qu'appareil supplémentaire ou appareillage supplémentaire dans un boîtier séparé (9), notamment distributeur ou armoire de commande.

9. Dispositif de communication (7) selon la revendication 8, dans lequel l'appareil supplémentaire (8) est réalisé en tant que récepteur d'un signal d'horloge radio pilotée, notamment en tant que récepteur DCF-77.

10. Dispositif de communication (7) selon la revendication 7, dans lequel les éléments d'infrastructure (10) électriquement conducteurs sont réalisés en tant que tubes d'eau, tubes de chauffage, entretoises métalliques, feuilles métalliques ou lignes électriques.

11. Dispositif de communication (7) selon la revendication 7 ou 10, dans lequel les éléments de structure (10) électriquement conducteurs sont réalisés en tant que couches électriquement conductrices, appliquées au moyen de rouleau, spray, pinceau ou similaire.

12. Dispositif de communication (7) selon la revendication 7, 10 ou 11, dans lequel les éléments de structure (10) électriquement conducteurs sont posés dans le crépi ou sur crépi.

13. Utilisation du système de communication (1) selon la revendication 1 ou du dispositif de communication (7) selon la revendication 7 dans un bâtiment.
